# EUROPÄISCHE PATENTANMELDUNG

(11) **EP 1 457 847 A2**
(43) Veröffentlichungstag der Anmeldung: **15.09.2004**
(21) Anmeldenummer: 04003474.6
(22) Anmeldetag: 17.02.2004
(51) Int. Cl.: G05B 19/042

(54) **Vorrichtung und Verfahren zur Identifizierung von Modulen in einer drucktechnischen Maschine**

(30) Priorität: 10.03.2003 US 453356 P
(71) Anmelder: Heidelberger Druckmaschinen Aktiengesellschaft, 69115 Heidelberg (DE)
(72) Erfinder: Foley, Keith Edward, Northwood NH 03261 (US); Guaraldi, Glenn Alan, Kingston NH 03848 (US); Craig, Steven Harris, Durham NH, 03824 (US)
(74) Vertreter: Franzen, Peter

(57) **Zusammenfassung**

Ein Verfahren zur Ermittlung der Art einer Vorrichtung (12, 14, 16, 18) einer Vielzahl von an eine Maschine angeschlossenen Vorrichtungen, wobei jede einer Art von mindestens einer ersten und einer zweiten Art zuzuordnen ist, sieht vor, dass an einer Steuerungseinheit (60) die Art der an die Maschine (10) angeschlossenen oder anzuschließenden Vorrichtung (12, 14, 16, 18) bestimmt wird. Die Steuerungseinheit (60) ist dazu geeignet, die Vorrichtung (12, 14, 16, 18) oder Maschine in Abhängigkeit von der Ermittlung voreinzustellen.
Eine drucktechnische Maschine umfasst eine Steuerungseinheit (60), eine mit der Steuerungseinheit (60) verbundene erste Vorrichtung (12, 14, 16, 18), die einer Art von mindestens einer ersten oder einer zweiten Art zuzuordnen ist und einen der Steuerungseinheit (60) zugänglichen Speicher 61, in dem Informationen bezüglich der ersten Art und der zweiten Art gespeichert sind.

## Beschreibung

Die vorliegende Erfindung betrifft eine Vorrichtung und ein Verfahren zur Identifizierung von Modulen, die in Maschinen der grafischen Industrie, z.B. in Falzapparaten,
Zusammentrageinrichtungen, Druckmaschinen und Heftern verwendet werden.

Die US 6,166,653 offenbart ein System zur Adressinitialisierung generischer Teilnehmer in einem verteilten Befehls- und Steuerungssystem für ein Transportsystem sowie ein entsprechendes Verfahren. Es wird der Abstand jedes Teilnehmers von der Steuerungseinheit bestimmt und jedem Teilnehmer in Abhängigkeit von seiner relativen Position eine spezifische Adresse zugewiesen.

Es ist eine Aufgabe der vorliegenden Erfindung, die Identifizierung verschiedener mit einer Maschine, insbesondere einer drucktechnischen Maschine verbundener Vorrichtungen zu ermöglichen. Die Bezeichnung "drucktechnische Maschine" bezieht sich auf alle Arten von Maschinen, die in der Druckindustrie eingesetzt werden.

Diese Aufgabe wird durch ein Verfahren gemäß Anspruch 1 sowie durch eine Maschine gemäß Anspruch 8 gelöst.

Ein erfindungsgemäßes Verfahren zur Bestimmung der Art einer Vorrichtung aus einer Vielzahl von mit einer Maschine, insbesondere einer drucktechnischen Maschine verbundenen Vorrichtungen, die jeweils einer ersten Art oder einer zweiten Art zuzuordnen sind, sieht vor, dass an einer Steuerungseinheit die Art der mit der Maschine verbundenen oder zu verbindenden Vorrichtung ermittelt wird. Die Steuerungseinheit kann die Vorrichtung oder die Maschine in Abhängigkeit der Ermittlung voreinstellen.

Die Vorrichtung umfasst vorzugsweise einen Artenindikator, und mit der Steuerungseinheit kann ein Indikatorenleser verbunden sein.

Die Steuerungseinheit sendet vorzugsweise in Abhängigkeit von der Ermittlung ein Steuersignal an die Vorrichtung.

Die Vorrichtungen können vorzugsweise hinzugefügt oder entfernt und gegen andere Vorrichtungen ausgetauscht werden, d.h. die Vorrichtungen sind vorzugsweise als Module ausgebildet. Bei den Modulen kann es sich z.B. um Magazinanleger (Zuführvorrichtungen) für eine Bindevorrichtung handeln, z.B. für eine Bindevorrichtung, in der die Produkte geheftet oder klebegebunden werden. Es kann sich auch um Horizontalanleger, Vertikalanleger, Umschlagsanleger, Kartenanleger, CD-Einfügevorrichtungen, Klebstoffauftragsvorrichtungen, Nummerierwerke oder Druckstationen handeln. Weitere Beispiele für drucktechnische Maschinen sind Druckmaschinen, Stapeleinrichtungen, Beschnittvorrichtungen und Falzapparate. In einer Druckmaschine kann z.B. eine Gummituchwaschvorrichtung mit einem Reinigungstuch oder mit einer Bürste vorgesehen sein. Die Steuerungseinheit könnte die Art der Gummituchwaschvorrichtung identifizieren und diese dann auf die geeignete Weise steuern. Auch die Art des Farbwerks, z.B. ein Anilox-Farbwerk, könnte identifiziert werden. In einem Falzapparat können unterschiedliche Arten der Abschnittssteuerung oder Silikonauftragsvorrichtungen identifiziert werden.

Bei jedem Hochfahren der Maschine kann diese vorzugsweise einen Selbsttest durchführen, um zu ermitteln, welche Vorrichtungen mit der Maschine verbunden sind.

Eine erfindungsgemäße drucktechnische Maschine umfasst eine Steuerungseinheit, eine mit der Steuerungseinheit verbundene erste Vorrichtung, die als Vorrichtung einer ersten Art oder einer zweiten Art zu kategorisieren ist, wobei die Steuerungseinheit die Art der ersten Vorrichtung ermittelt, und einen der Steuerungseinheit zugänglichen Speicher, der Informationen bezüglich der ersten Art und der zweiten Art speichert.

Die erste Vorrichtung umfasst vorzugsweise einen Artenindikator, und die Maschine umfasst weiterhin vorzugsweise einen mit der Steuerungseinheit verbundenen Indikatorenleser.

Die Steuerungseinheit ist vorzugsweise dazu geeignet, die erste Vorrichtung in Abhängigkeit von der Information automatisch einzustellen.

Die Information wird vorzugsweise in Tabellenform gespeichert.

Die erste Vorrichtung kann über einen elektrischen Stecker, eine feste Übertragungsleitung oder eine drahtlose Verbindung mit der Steuerungsvorrichtung verbunden sein.

Die drucktechnische Maschine umfasst vorzugsweise eine mit der Steuerungseinheit verbundene zweite Vorrichtung, die der ersten oder der zweiten Art zuzuordnen ist.

Die erste Vorrichtung ist vorzugsweise ein Modul, das trennbar mit der Steuerungseinheit verbunden ist und gegen eine andere Vorrichtung ausgetauscht werden kann, die als Vorrichtung der ersten oder der zweiten Art zu kategorisieren ist.

Weitere Merkmale und vorteilhafte Ausgestaltungen der Erfindung werden in der nachfolgenden Beschreibung bevorzugter Ausführungsformen in Zusammenhang mit den beigefügten, nachfolgend aufgeführten Zeichnungen näher erläutert.

Es zeigen:
- Fig. 1: eine Bindevorrichtung mit Mitnehmer-Transportvorrichtung und verschiedenen Modulen, die von einer erfindungsgemäßen Steuerungseinheit identifiziert werden.
- Fig. 2: eine Steckverbindung, welche die Identifizierung der Vorrichtungsart ermöglicht;
- Fig. 3: eine Stirnansicht der in Fig. 2 gezeigten Steckverbindung;
- Fig. 4: eine alternative Steckverbindung;
- Fig. 5: eine weitere alternative Steckverbindung;
- Fig. 6: eine alternative Ausführungsform, bei der die Vorrichtung eine Spannungsquelle aufweist, und
- Fig. 7: ein in einer weiteren Ausführungsform der vorliegenden Erfindung erzeugtes digitales Signal.

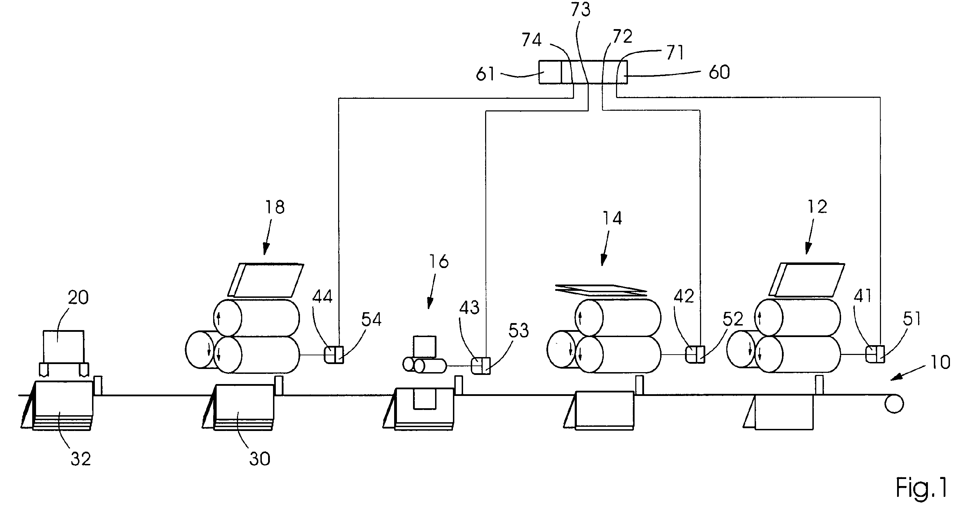

Fig. 1 zeigt eine Mitnehmer-Transportvorrichtung 10 zum Zusammentragen oder Sammeln von Druckprodukten, die anschließend von einer Heftvorrichtung 20 geheftet werden. An vorgegebenen Positionen oder Stationen entlang der Transportvorrichtung 10 befinden sich Zuführmodule, die in der gezeigten Ausführungsform als ein Vertikalanleger 12, ein Horizontalanleger 14, eine Karten-Einfügevorrichtung 16 und ein weiterer Vertikalanleger 18 ausgebildet sind. Diese Zuführmodule führen der Transportvorrichtung 10 ihr jeweiliges Produkt zu, so dass ein zusammengetragenes oder gesammeltes Produkt 30 entsteht, das anschließend in der Heftvorrichtung 20 zu einem fertigen Produkt 32 geheftet wird. Obgleich die Transportvorrichtung hier mit vier Stationen beschrieben ist, können auch deutlich mehr Stationen und andere Arten von Modulen vorgesehen sein, z.B. Klebstoffauftragsvorrichtungen, Nummerierwerke, CD-Einfügevorrichtungen, Umschlagsanleger, Druckstationen, Karteneinblasvorrichtungen, Magazinbestücker, Anleger für bewegte Produkte, Stapelvorrichtungen und Beschnittvorrichtungen, die nach der Heftvorrichtung angeordnet wären.

Diese Module sind entlang der Transportvorrichtung austauschbar, d. h. die Karten-Einfügevorrichtung 16 und der Horizontalanleger 14 können bei Bedarf gegen eine andere Konfiguration ausgetauscht werden.

Jedes Modul 12, 14, 16, 18 umfasst einen Artenindikator 41, 42, 43 bzw. 44, welcher die Art des Moduls identifiziert. Ein Indikatorenleser 51, 52, 53, 54 kann z.B. in Verbindung mit einem Prozessor 60 und einem Speicher 61 anhand des jeweiligen Indikators 41, 42, 43, 44 die Art der Vorrichtung ermitteln. Jeder Leser 51, 52, 53, 54 ist über eine Eingabe 71, 72, 73, 74 mit dem Prozessor 60 verbunden, z.B. über einen Datenbus.

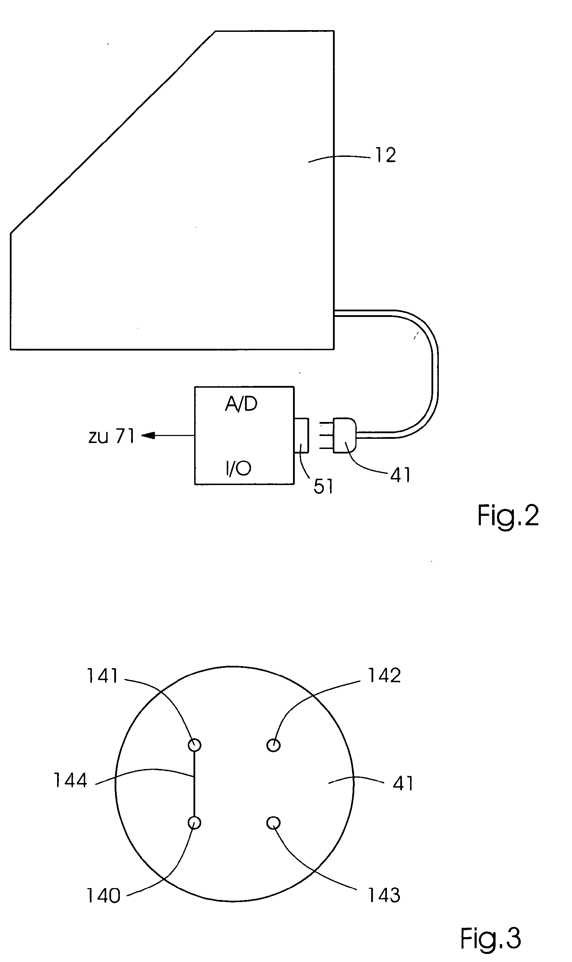

Wie in Fig. 2 gezeigt ist, kann der Artenindikator 41 als ein Stecker ausgebildet sein, dessen Konfiguration nur für die Vorrichtungsart, z.B. für einen Vertikalanleger 12, verwendet wird. Wie in Fig. 3 gezeigt ist, kann der Stecker 41 vier Stifte 140, 141, 142, 143 aufweisen, wobei der Stift 140 vom Leser 51 Strom bezieht. Der Leser 51 versorgt den Stift 140 mit Strom einer gewissen Spannung und liest die an den einzelnen weiteren Stiften 141, 142, 143 anliegende Spannung. Bei der Herstellung des Artenindikators 41 wird eine Verbindung 144 zwischen dem Stift 140 und den Stiften 141, 142 und/oder 143 im Indikator 41 geschaffen.

Wenn der Leser 51 nur am Stift 141 eine Spannung ermittelt, kann der Leser 51, der einen DA-Wandler umfasst, ein digitales Drei-Bit-Signal 001 an den Prozessor 60 senden. Eine im Speicher 61 gespeicherte Tabelle kann das Signal 001 als einen Vertikalanleger identifizieren. Daraufhin kann der Prozessor 60 automatisch Steuerungsschritte ausführen, z.B. in Abhängigkeit von der Art der Vorrichtung an der ersten Stelle entlang der Transportvorrichtung 10 die Eigenschaften einer grafischen Benutzersoberfläche (GUI) ändern oder Einstellungen an weiteren Vorrichtungen entlang der Transportvorrichtung 10 oder an der Heftvorrichtung 20 vornehmen.

Anhand der Vierstift-Konfiguration des Indikators 41 können acht unterschiedliche Vorrichtungsarten identifiziert werden. Wird beispielsweise an den Stiften 141, 142 und 143 kein Strom gemessen, so könnte dies einen Horizontalanleger identifizieren und die Übertragung eines Ausgabe-Bytes 000 bewirken, während Strom am Stift 141 nur auf einen Vertikalanleger und ein dementsprechendes 001-Signal, Strom am Stift 142 nur auf einen Kartenanleger und ein dementsprechendes 010-Signal, Strom am Stift 143 nur auf einen CD-Anleger und ein dementsprechendes 011-Signal, Strom an beiden Stiften 141 und 142 nur auf einen Drucktaschenanleger und ein dementsprechendes 100-Signal, Strom an den beiden Stiften 141 und 143 nur auf ein Nummerierwerk und ein dementsprechendes 101-Signal, Strom an den beiden Stiften 142 und 143 nur auf ein Leimbecken und ein dementsprechendes 110-Signal und schließlich Strom an allen drei Stiften einen Karteneinblasanleger und ein dementsprechendes 111-Signal hinweist.

Der Speicher 61 kann also eine Datenbank enthalten, z.B. eine Tabelle, in der 000 für einen Horizontalanleger, 001 für einen Vertikalanleger usw. steht. Der Prozessor 60, welcher die Bytes von den Lesern 51, 52, 53, 54 an den bekannten Eingaben 71, 72, 73, 74 empfängt, weiß daher genau, an welcher Stelle entlang der Transportvorrichtung 10 sich welche Art von Vorrichtung befindet.

Alternativ könnte der Leser auch direkt Signale von den Stiften 141, 142, 143 an den Prozessor 60 leiten, wobei ein AD-Wandler für jeden Stift je nachdem, ob am Stift Strom anliegt oder nicht, nur ein 0- oder 1-Signal sendet und der Prozessor 60 die Daten von jedem Stift 141, 142, 143 direkt verarbeitet. Mit anderen Worten kann ein Teil der Funktionen des Lesers 51 auch vom Prozessor 60 übernommen werden, und dieser kann an jedem Stift 141, 142, 143 überprüfen, ob Strom anliegt oder nicht.

Es können auch mehr oder weniger Stifte verwendet werden. Die Stifte können auch für andere Zwecke verwendet werden, so lange diese den Identifikationsvorgang nicht beeinträchtigen.

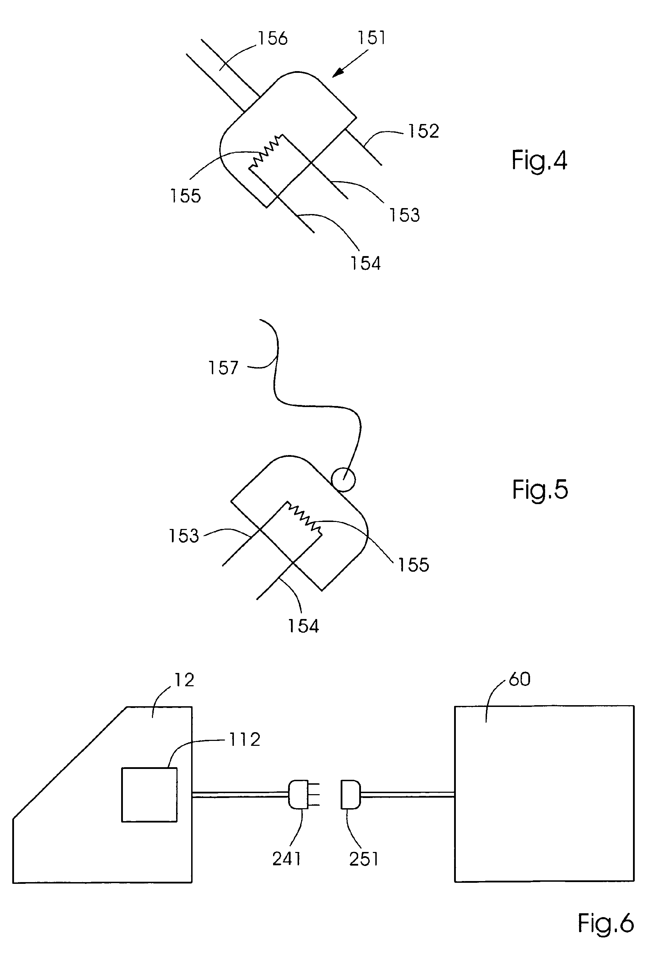

Fig. 4 zeigt einen alternativen Indikator 151, bei dem ein Stift 152 dazu dient, ein Steuerungssignal bereitzustellen oder das Modul über ein Kabel 156 mit Strom zu versorgen. Ein Leser 153 stellt eine bestimmte Spannung oder einen durch einen Widerstand 155 fließenden Strom an einem Stift 153 bereit und liest anschließend an einem Stift 154 eine Spannung oder Stromstärke ab, die von der Stärke des Widerstands abhängig ist. Der Leser oder Prozessor kann die ermittelte Spannung oder Stromstärke mit Hilfe eines AD-Wandlers in ein charakteristisches digitales Signal umwandeln, das verwendet wird um über eine im Speicher 61 gespeicherten Tabelle die Art des Moduls zu identifizieren. Ein Stecker mit einem Wiederstand von 1 kΩ kann beispielsweise eine Art von Vorrichtung identifizieren, während ein Stecker mit einem Widerstand von 10kΩ eine weitere Art von Vorrichtung identifiziert. In Abhängigkeit von der Sensibilität und Genauigkeit des AD-Wandlers kann anhand verschieden starker Widerstände also eine große Anzahl von Vorrichtungsarten identifiziert werden.

Fig. 5 zeigt dieselbe Art von Indikator wie Fig. 4, allerdings ohne den zusätzlichen Stift 152. In dieser Ausführungsform braucht der Artenindikator nicht elektrisch mit dem Modul verbunden sein und kann z.B. einfach über eine Kette 157 befestigt sein.

Der Stift 152 kann jedoch nützlich sein, um beispielsweise ein Steuersignal zurück an das Modul zu schicken, um z.B. das Modul in Abhängigkeit von der Art des an die Transportvorrichtung 10 angeschlossenen Moduls voreinzustellen.

Die Steuerungseinheit 60 kann bei jedem Hochfahren der Transportvorrichtung 10 einen Selbsttest durchführen, um die Komponenten entlang der Transportvorrichtung 10 zu identifizieren.

Fig. 6 zeigt eine alternative Ausführungsform, in der das Modul 12 eine mit einem Artenindikator 141 verbundene Spannungsquelle 112 umfasst. Die Spannungsquelle 112 legt in Abhängigkeit von der Art des Moduls 12 eine charakteristische Spannung an einen Stift am Indikator 241 an. Diese Spannung wird von einem Leser 251 gelesen und an den Prozessor 60 geleitet. Eine Spannung von 5 V könnte z.B. einen Vertikalanleger angeben, während eine Spannung von 10 V einen Horizontalanleger andeutet. Diese Information ist im Speicher 61 gespeichert. Die Anzahl der Modularten, die identifiziert werden können, ist abhängig vom Spannungsbereich und der Sensibilität des AD-Wandlers.

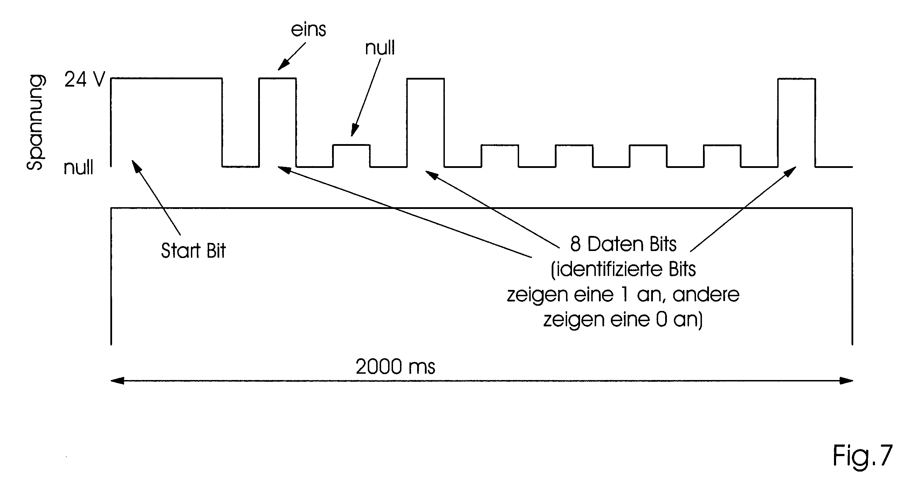

Fig. 7 zeigt eine weitere alternative Ausführungsform, bei der der Artenindikator ein charakteristisches digitales Signal erzeugt mit Hilfe eines Steckers, der einen Stift für das Signal, einen Stift zum Erden und einen Stift für die Stromversorgung aufweist, wenn das Modul keinen Strom bereitstellt. Das Signal kann an jeden digitalen Eingang des Prozessors 60 geschickt werden. Es kann z.B. fortlaufend an den Prozessor 60 übermittelt werden, so dass die Präsenz des Moduls entlang der Transportvorrichtung 10 permanent erfasst wird und ein unbeabsichtigtes Entfernen des Moduls ebenso festgestellt werden kann.

Fig. 7 zeigt ein Beispiel eines zwei Sekunden währenden Signals, das von einem am Modul 12 vorgesehen Chip gesendet wird. Für die ersten laufenden 400 Millisekunden wird ein Startbit gesendet, das den Beginn des Signals anzeigt. Anschließend werden 8 Datenbits gesendet, die ein Acht-Byte-Wort bereitstellen, das in der Lage ist, 255 spezifische Modularten zu identifizieren. Die Bits haben eine Dauer von 100 Millisekunden gefolgt von einer 100 Millisekunden dauernden Pause. Bei dem Signal kann es sich um ein 24-Volt-Signal handeln, wobei 24 Volt das Vorhandensein eines Signals und 0 Volt oder ein bestimmter Spannungswert unter 24 Volt die Anwesenheit eines Signals anzeigen.

Es könnten auch zusätzliche Bytes bereitgestellt werden, um den Ort des Moduls entlang der Transportvorrichtung zu identifizieren, für den Fall, dass nicht jede Position eine charakteristische Eingabe an die Steuerungseinheit oder den Prozessor 60 sendet. Auf diese Weise könnte ein Multiplex-Signal an einen einzigen Eingang am Prozessor 60 gesendet werden.

Der Wert des Bytes würde mit Hilfe einer im Speicher 61 gespeicherten Tabelle dazu herangezogen, die Art des Moduls zu identifizieren.

Anhand der Vorrichtungsart können bestimmte Schalter, Sensoren oder Betriebsarten von der Steuerung 60 identifiziert oder gesteuert werden. All diese Informationen können im Speicher 61 gespeichert werden.

Der Artenindikator kann alternativ auch einen Timer-Chip umfassen, der je nach Modulart ein digitales Signal charakteristischer Länge sendet. Der Timer-Chip umfasst also einen Taktgeber in Kombination mit einem Zählerkreislauf. Die Länge des digitalen Signals kann vom Prozessor 60 identifiziert werden, um die Art der Vorrichtung zu bestimmen. Eine Dauer von 200 Millisekunden könnte beispielweise einen Vertikalanleger, eine Dauer von 400 Millisekunden einen Horizontalanleger identifizieren.

Alternativ kann es sich bei dem Artenindikator auch um einen Datenträger handeln, der von einem induktiven Feld gelesen wird, wenn das Modul an die Maschine angeschlossen wird. Eine solche Vorrichtung wird z.B. von "Pepperl und Fuchs" hergestellt und besteht aus einer Schreib-/Lesestation und Datenträgern. Die Datenträger werden aktiviert, wenn sie den Schreib-/Lesekopf des Lesers passieren und schicken bis zu 1 KByte Daten zurück. Die Datenträger können auch vom Schreib-/Lesekopf angesteuert werden, um die Artidentifikation zu liefern.

Auf diese Weise ermöglicht die vorliegende Erfindung die geeignete maschinelle Steuerung der Module und die geeignete Bewegungssteuerung. Das erfindungsgemäße Verfahren ermöglicht es der Steuerung, das Vorhandensein und die Art eines bestimmten Moduls deterministisch zu ermitteln. Bei der Steuerung 60 kann es sich z.B. um einen Prozessor auf Intel-Basis oder um einen PLC handeln.

### Liste der Bezugszeichen

- 10: Transportvorrichtung
- 12: Vertikalanleger
- 14: Horizontalanleger
- 16: Karten-Einfügevorrichtung
- 18: Vertikalanleger
- 20: Heftvorrichtung
- 30: Druckprodukt
- 32: fertiges Produkt
- 41: Artenindikator/Stecker
- 42-44: Artenindikator
- 51-54: Indikatorenleser
- 60: Prozessor
- 62: Speicher
- 71-74: Eingang
- 112: Spannungsquelle
- 140-143: Stift
- 144: Verbindung
- 151: Artenindikator
- 152: Stift
- 153: Leser
- 154: Stift
- 155: Widerstand
- 156: Kabel
- 157: Kette
- 241: Indikator
- 251: Leser

## Patentansprüche

1. Verfahren zur Ermittlung der Art einer Vorrichtung (12, 14, 16, 18) einer Vielzahl von Vorrichtungen, die an eine Maschine (10) angeschlossen sind, wobei jede Vorrichtung (12, 14, 16, 18) einer Art von mindestens einer ersten und einer zweiten Art zuzuordnen ist,
**gekennzeichnet durch**
den Verfahrensschritt:
Ermitteln der Art der an die Maschine (10) angeschlossenen oder anzuschließenden Vorrichtung (12, 14, 16, 18) an einer Steuerungseinheit (60), die dazu geeignet ist, die Vorrichtung (12, 14, 16, 18) oder die Maschine (10) in Abhängigkeit von der
Ermittlung voreinzustellen.

2. Verfahren nach Anspruch 1,
**dadurch gekennzeichnet,**
**dass** die Vorrichtung (12, 14, 16, 18) einen Artenindikator (41-44, 151, 241) umfasst und dass mit der Steuerungseinheit (60) ein Indikatorenleser (51, 52, 53, 54, 153, 251) verbindbar ist.

3. Verfahren nach einem der Ansprüche 1 bis 2,
**dadurch gekennzeichnet,**
**dass** die Steuerungseinheit (60) in Abhängigkeit von der Ermittlung ein Steuersignal an die Vorrichtung (12, 14, 16, 18) schickt.

4. Verfahren nach einem der Ansprüche 1 bis 3,
**dadurch gekennzeichnet,**
**dass** die Vorrichtungen (12, 14, 16, 18) hinzugefügt oder entfernt und gegen andere Vorrichtungen anderer Arten ausgetauscht werden können.

5. Verfahren nach einem der Ansprüche 1 bis 4,
**dadurch gekennzeichnet,**
**dass** die Vorrichtungen (12, 14, 16, 18) als Anleger für eine Bindevorrichtung ausgebildet sind.

6. Verfahren nach einem der Ansprüche 1 bis 4,
**dadurch gekennzeichnet,**
**dass** die Vorrichtungen (12, 14, 16, 18) als Druckmaschinenkomponenten ausgebildet sind.

7. Verfahren nach einem der Ansprüche 1 bis 6,
**dadurch gekennzeichnet,**
**dass** weiterhin bei jedem Hochfahren der Maschine (10) ein Selbsttest durchgeführt wird, um zu bestimmen, welche Vorrichtungen (12, 14, 16, 18) mit der Maschine (10) verbunden sind.

8. Maschine (10) mit
einer Steuerungseinheit (60),
einer mit der Steuerungseinheit (60) verbundenen ersten Vorrichtung (12, 14, 16, 18), die einer Art von mindestens einer ersten Art und einer zweiten Art zuzuordnen ist, wobei die Steuerungseinheit (60) die Art der ersten Vorrichtung (12, 14, 16, 18) ermittelt, und
einem Speicher (60), der der Steuerungseinheit (60) zugänglich ist und Informationen bezüglich der ersten Art und der zweiten Art speichert.

9. Maschine nach Anspruch 8,
**dadurch gekennzeichnet,**
**dass** die erste Vorrichtung einen Artenindikator (41, 42, 43, 44, 151, 241) umfasst und die Maschine (10) weiterhin einen mit der Steuerungseinheit (60) verbundenen Indikatorenleser (51, 52, 53, 54, 153, 251) umfasst.

10. Maschine nach einem der Ansprüche 8 bis 9,
**dadurch gekennzeichnet,**
**dass** die Steuerungseinheit (60) in Abhängigkeit von der Information eine automatische Einstellung der ersten Vorrichtung (12, 14, 16, 18) vornimmt.

11. Maschine nach einem der Ansprüche 8 bis 10,
**dadurch gekennzeichnet,**
**dass** die Information in Form einer Tabelle gespeichert ist.

12. Maschine nach einem der Ansprüche 8 bis 11,
**dadurch gekennzeichnet,**
**dass** die erste Vorrichtung (12, 14, 16, 18) über einen elektrischen Stecker (41), eine feste Übertragungsleitung oder eine drahtlose Verbindung mit der Steuerungseinheit (60) verbunden ist.

13. Maschine nach einem der Ansprüche 8 bis 12,
**dadurch gekennzeichnet,**
**dass** die Maschine (10) eine mit der Steuerungseinheit (60) verbundene zweite Vorrichtung (12, 14, 16, 18) ist, die einer Art der ersten oder zweiten Art zuzuordnen ist.

14. Maschine nach einem der Ansprüche 8 bis 13,
**dadurch gekennzeichnet,**
**dass** die erste Vorrichtung (12, 14, 16, 18) modular ausgebildet ist.

15. Maschine nach einem der Ansprüche 8 bis 15,
**dadurch gekennzeichnet,**
**dass** die Steuerungseinheit (60) eine Vielzahl von Eingängen (71, 72, 73, 74) aufweist, die jeweils eine bestimmte Position der Maschine (10) identifizieren.

16. Maschine nach einem der Ansprüche 8 bis 15,
**dadurch gekennzeichnet,**
**dass** der Artenindikator (41, 42, 43, 44, 151, 241) als ein Stecker mit einem Stromeingangsstift und mindestens einen weiteren Stift aufweist, wobei die erste oder zweite Art anhand einer Verbindung zwischen dem Stromstift und dem weiteren Stift identifiziert wird.

17. Maschine nach Anspruch 16,
**dadurch gekennzeichnet,**
**dass** der Stromeingangsstift und der weitere Stift von einem Widerstand (155) getrennt sind.

18. Maschine nach Anspruch 16,
**dadurch gekennzeichnet,**
**dass** der mindestens eine weitere-Stift zwei Stifte umfasst, wobei die Art der Vorrichtung durch das Anliegen oder Fehlen von Strom an den weiteren Stiften bestimmt wird, wenn an den Stromeingangsstift Strom angelegt wird.

19. Maschine nach Anspruch 10,
**dadurch gekennzeichnet,**
**dass** der Artenindikator ein digitales Signal sendet.
